(19) Europäisches Patentamt
European Patent Office
Office européen des brevets

(11) Numéro de publication : **0 008 997**
**B1**

# (12) FASCICULE DE BREVET EUROPÉEN

(45) Date de publication du fascicule du brevet : **17.06.81**

(51) Int. Cl.³ : **C 08 G 77/42**

(21) Numéro de dépôt : **79420042.8**

(22) Date de dépôt : **11.09.79**

## (54) Elastomères thermoplastiques polystyréniques diorganopolysiloxaniques; procédé d'obtention de ces élastomères.

(30) Priorité : **13.09.78 FR 7826245**

(43) Date de publication de la demande :
**19.03.80 (Bulletin 80/06)**

(45) Mention de la délivrance du brevet :
**17.06.81 Bulletin 81/24**

(84) Etats contractants désignés :
**BE CH DE GB IT NL**

(56) Documents cités :
**FR - A - 2 037 751**
**FR - A - 2 105 979**
**FR - A - 2 105 980**
**FR - A - 2 145 701**
**FR - A - 2 295 046**
**FR - A - 2 373 574**

(73) Titulaire : **RHONE-POULENC INDUSTRIES**
**22, avenue Montaigne**
**F-75008 Paris (FR)**

(72) Inventeur : **Prud'homme, Christian**
**19, rue du Commandant Faurax**
**F-69006 - Lyon (FR)**
Inventeur : **Chaumont, Philippe**
**4, rue du Nord**
**F-67610 La Wantzenau (FR)**
Inventeur : **Herz, Jean**
**72, rue Principale**
**F-67140 - Saint-Pierre (FR)**

(74) Mandataire : **Chichery, Guy et al**
**RHONE-POULENC INDUSTRIES Centre de Recherches des Carrières Service BREVETS**
**F-69190 Saint-Fons (FR)**

**EP 0 008 997 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 17, rue du Louvre, 75001 Paris, France

# Elastomères thermoplastiques polystyréniques diorganopolysiloxaniques ; procédé d'obtention de ces élastomères

La présente invention a pour objet des élastomères thermoplastiques polyséquencés comportant une succession de motifs dont chacun est formé d'une séquence rigide polystyrénique et d'une séquence souple diorganopolysiloxanique reliées l'une à l'autre par une liaison non hydrolysable.

Elle a pour objet, en outre, leur procédé de préparation mettant en œuvre la réaction d'hydrosilylation.

Des élastomères thermoplastiques comportant des séquences polystyréniques et des séquences diorganopolysiloxaniques sont connus (brevets français 2 104 871 et 2 105 980). Ils sont fabriqués selon un processus mettant en œuvre plusieurs phases, par exemple

1) polymérisation anionique du styrène ou de ses dérivés tels que l'α-méthylstyrène, en milieu solvant, à l'aide d'un dilithien organique.

2) mise en contact, à une température inférieure à − 50 °C, du polymère polystyrénique, obtenu dans la phase (1), portant à chaque extrémité de sa chaîne un groupe C—Li, avec une faible quantité d'un hexaorganocyclotrisiloxane.

3) addition de l'hexaorganocyclotrisiloxane (en quantité suffisante pour obtenir la masse moléculaire désirée de la séquence diorganopolysiloxanique) au polymère obtenu dans la phase (2) qui comporte à chaque extrémité de sa chaîne un groupe Si—O—Li, puis chauffage pour effectuer la polymérisation anionique de l'hexaorganocyclotrisiloxane.

4) couplage du copolymère polystyrénique-polydiorganosiloxanique préparé dans la phase (3) avec un diorganodichlorosilane.

5) lavage avec de l'eau du copolymère obtenu dans la phase (4) pour remplacer les groupes terminaux Si—O—Li par des groupes Si—OH et éliminer en même temps le chlorure de lithium ou action sur les groupes Si—O—Li d'un silane de formule $T_3SiCl$ pour former des groupes terminaux Si—O—$SiT_3$ (T = radical hydrocarboné).

Ce processus n'est pas aisé à mettre en œuvre à l'échelle industrielle. En effet, il exige beaucoup de temps, une surveillance rigoureuse des différentes phases et l'emploi dans la phase (1) d'un dilithien organique fort coûteux. Ce dilithien est indispensable car il conduit au cours de la phase (2) à des groupes terminaux Si—O—Li qui assureront au cours de la phase (3) la polymérisation anionique de l'hexaorganocyclotrisiloxane sans provoquer des réarrangements ou des coupures des chaînes polysiloxaniques. Des groupes terminaux Si—O—Na ou Si—O—K, obtenus à partir de composés organiques dipotassés ou disodés, plus accessibles et moins coûteux, ne peuvent donc être employés dans ce processus à nombreuses étapes.

Un autre inconvénient provient encore du manque de réactivité de l'hexaorganocyclotrisiloxane vis-à-vis des groupes

$$-CH_2-\underset{\underset{C_6H_5}{|}}{C}(CH_3)Li$$

bloquant la chaîne des polymères de l'α-méthylstyrène.

Etant donné que ces polymères vivants de l'α-méthylstyrène ne sont pas stables au-dessus de − 40 °C et qu'ils n'entrent en réaction avec l'hexaorganocyclotrisiloxane pour former des groupes terminaux Si-O-Li qu'au-dessus de cette température, il est nécessaire de leur ajouter du styrène, avant leur mise en contact avec l'hexaorganocyclotrisiloxane, de manière à inclure de petits blocs polystyréniques à chaque extrémité de leur chaîne. Cette technique permet d'opérer ultérieurement à une température supérieure à − 40 °C sans qu'il se produise un phénomène de dépolymérisation mais elle a l'inconvénient d'introduire des hétérogénéités dans la chaîne des polymères de l'α-méthylstyrène.

Il en résulte qu'il est particulièrement désirable de fabriquer d'autres sortes d'élastomères thermoplastiques à séquences polystyréniques et à séquences diorganopolysiloxaniques par un procédé plus simple et plus fiable mettant en œuvre non seulement des composés organiques dilithiés mais aussi disodés et dipotassés.

La présente invention a pour objet de tels élastomères thermoplastiques caractérisés en ce qu'ils sont formés d'une succession de motifs répondant à la formule générale moyenne F :

$$-\left[CH_2CH_2SiR_2\left[C(C_6H_5)_2-CH_2\right]_a\left[\underset{\underset{G}{|}}{C}R'-CH_2\right]_n-A-\left[CH_2-\underset{\underset{G}{|}}{C}R'\right]_{n'}\longrightarrow$$
$$\left[CH_2-C(C_6H_5)_2\right]_a SiR_2CH_2CH_2SiR_2(OSiR_2)_m\right]-$$

dans laquelle :

— les symboles R, identiques ou différents, représentent des radicaux méthyles, éthyles, n-propyles, phényles, trifluoro-3,3,3 propyles.

— les symboles R', identiques, représentent des atomes d'hydrogènes, des radicaux méthyles.

— le symbole A représente un radical hydrocarboné divalent, sans insaturation aliphatique, ayant de 6 à 45 atomes de carbone.

— les symboles G identiques ou différents représentent l'un des radicaux de formule :

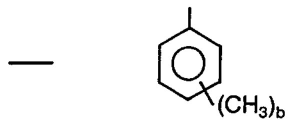

avec b représentant 0, 1, 2 ou 3

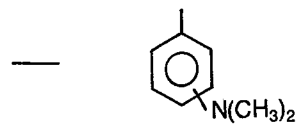

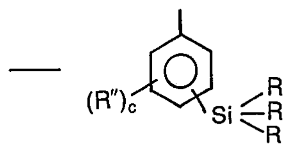

avec

— R" représentant un atome d'hydrogène, un radical méthyle, ou un groupement $—SiR_3$,

— c représentant un nombre entier égal à 0, 1 ou 2,

— R ayant la signification préalablement donnée,

— les symboles a identiques, représentent zéro ou 1.

— les symboles n et n', identiques ou différents, représentent des nombres quelconques dont la somme s'étale de 20 à 500.

— le symbole m représente un nombre quelconque s'étalant de 1 à 1 500.

Le radical divalent hydrocarboné, représenté par le symbole A, est choisi parmi les radicaux naphtylènes, les radicaux biphénylènes et les radicaux alcoylènes ou polyalcoylènes substitués ou non par des cycles aromatiques.

A titre illustratif de radicaux de cette sorte peuvent être mentionnés ceux répondant aux formules ci-après :

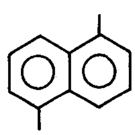 ; 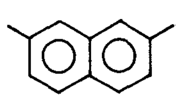 : 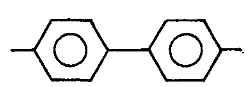 ; $—(CH_2)_5—$

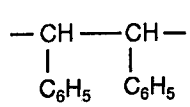 ; 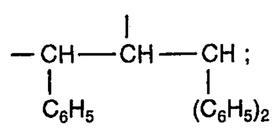 ; 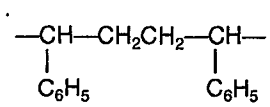

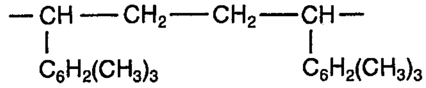

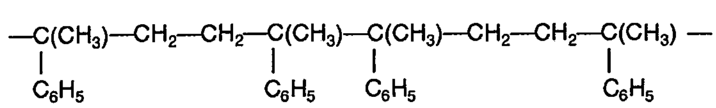

Cette dernière formule représente probablement l'enchaînement appelé tétramère de l'α-méthylstyrène ; elle figure dans les articles de C.L. LEE, J. SMID et M. SZWARC (J. Phys. Chem. *66,* 904-1962) et

M.N. BERGER, J.K. BOULTON, B.W. BROOKS et M.J. EVANS (Chem. Comm., *1*, 8, 1967).

Les différents symboles figurant dans la formule F peuvent prendre les significations préférentielles suivantes :

— les symboles R représentent des radicaux méthyles,

— le symbole A représente le radical naphtylène-1,5, le tétramère de l'α-méthylstyrène, les radicaux de formule :

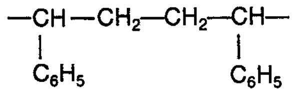 , 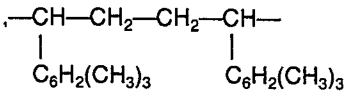

— les symboles G représentent :

— des radicaux phényles,

— des radicaux triméthylsilylphényle ; bis (triméthylsilyl) phényle ; tris (triméthylsilyl) phényle,

— et uniquement lorsque les symboles R' représentent des atomes d'hydrogène, des radicaux de formule,

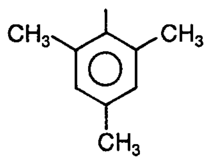 ou 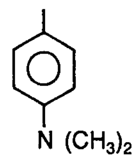

— les symboles a représentent zéro.

— les symboles n et n' représentent des nombres quelconques dont la somme s'étale de 30 à 400.

— le symbole m représente un nombre quelconque s'étalant de 10 à 1 200.

A titre illustratif peuvent être mentionnés, comme élastomères thermoplastiques, ceux dont les motifs répondent aux formules ci-après :

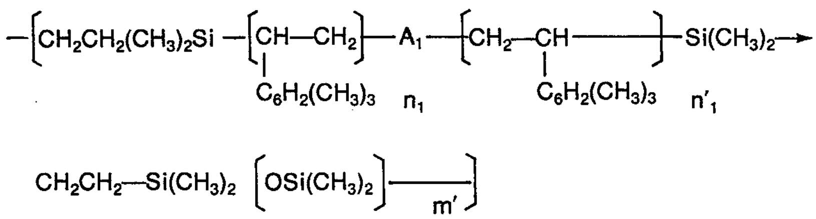

$n_1 + n'_1 = 37$ ; $m' = 125$ ou $230$

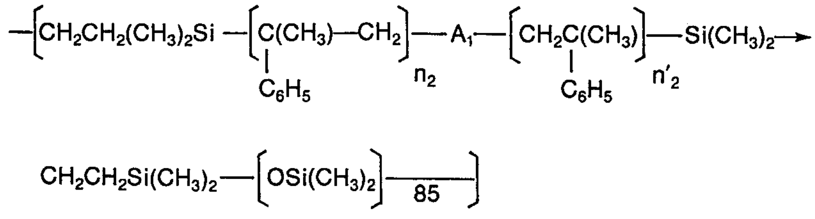

$n_2 + n'_2 = 41$

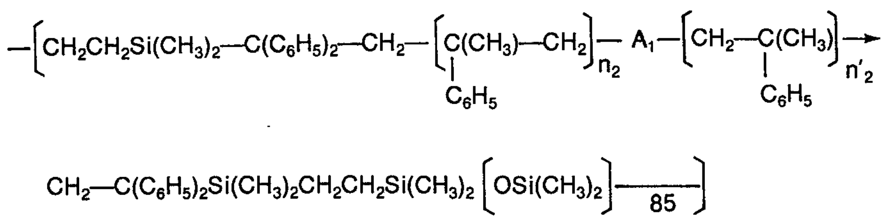

$n_2 + n'_2 = 41$

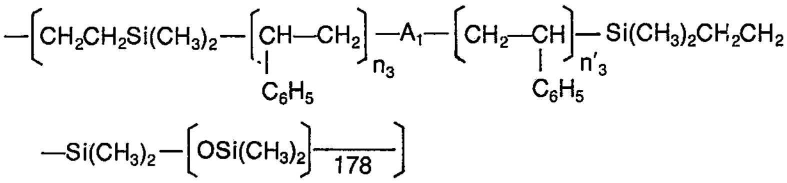

$n_3 + n'_3 = 95$

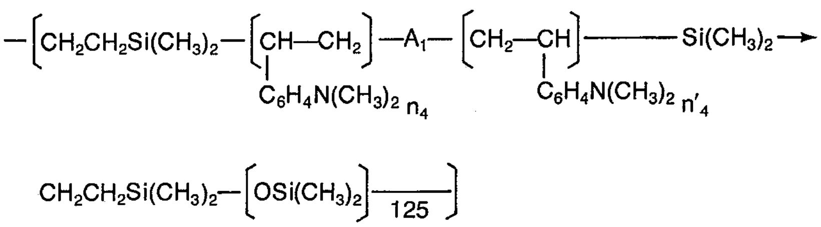

$n_4 + n'_4 = 30$

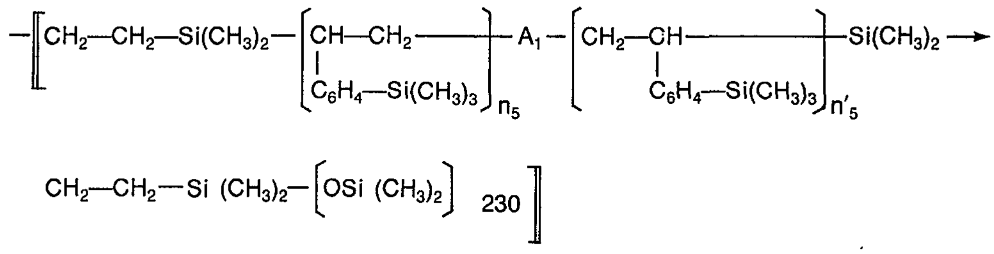

avec $n_5 + n'_5 = 58$

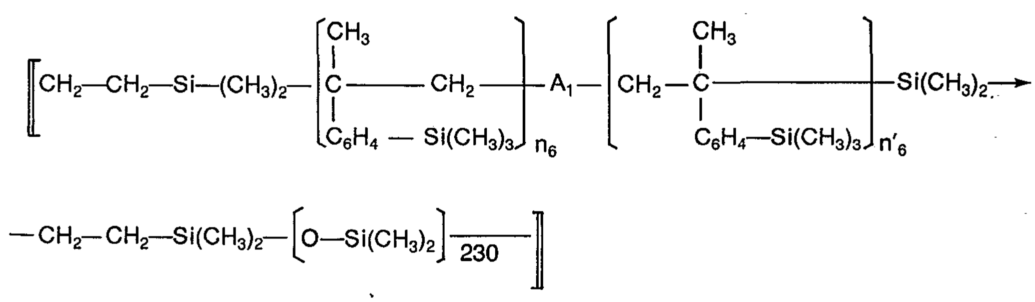

avec $n_6 + n'_6 = 45$

$A_1$ dans toutes ces formules représente le tétramère de l'α-méthylstyrène.

Le procédé de préparation des élastomères thermoplastiques de formule F est réalisé aisément en 3 phases.

La première phase consiste à polymériser anioniquement un monomère ou plusieurs monomères de formule générale $CGR' = CH_2$. A titre d'exemples de monomères particuliers on peut citer le styrène ou un de ses dérivés choisis parmi (1) l'α-méthylstyrène, (2) les styrènes substitués sur le noyau phényle par 1, 2 ou 3 radicaux méthyles (on considère que le radical vinyle des styrènes substitués est en position 1 sur le benzène tels que le méthyl-2 styrène, le méthyl-3 styrène, le méthyl-4 styrène, le diméthyl-2,4 styrène, le diméthyl-2,5 styrène, le diméthyl-3,4 styrène, le diméthyl-3,6 styrène, le triméthyl-2,4,5 styrène, le triméthyl-2,4,6 styrène (3) les styrènes substitués sur le noyau phényle par un radical diméthylamino ou diéthylamino tels que le diméthylamino-4 styrène, le diéthylamino-3 styrène. (4) les styrènes substitués sur le noyau phényle par 1, 2 ou 3 radicaux silylés-$SiR_3$.

De préférence on choisit le styrène, l'α-méthylstyrène, le triméthyl-2,4,6 styrène (vinylmésitylène), le diméthylamino-4 styrène, le p-triméthylsilylstyrène, le p-triméthylsilyl, α-méthylstyrène, le bis (triméthylsilyl)-3,5 styrène.

La polymérisation anionique a lieu au sein de solvants organiques anhydres, à une température inférieure à − 30 °C mais ne descendant guère au-dessous de − 85 °C, à l'aide d'un amorceur de formule

$A(M)_2$. Le symbole A a la signification déjà donnée relative à la formule F et le symbole M représente un atome de métal alcalin tel que le potassium, le sodium, le lithium, de préférence le potassium.

Les solvants organiques utilisés sont choisis parmi les éthers-oxydes organiques linéaires ramifiés ou cycliques tels que l'éther diméthylique, l'éther diéthylique, l'éther diisopropylique, l'éther dibutylique, le tétrahydrofuranne ou parmi des diéthers de glycols tels que le diméthoxy-1,2 éthane.

La quantité de solvants mise en œuvre représente de 60 à 98 % du poids du milieu réactionnel ; elle dépend de la solubilité des polymères dans ce milieu et de la température à laquelle sera réalisée la polymérisation.

Les amorceurs de formule $A(M)_2$ sont choisis préférentiellement parmi les oligomères à sites dicarboanioniques à contre-ions potassium ou sodium.

La préparation de ce type d'amorceurs est bien connue ; elle est décrite par exemple dans l'article de C.L. LEE, J. SMID et M. SZWARC publié dans Trans. Farad. Soc. *59*-1 192 (1963) et dans l'article de G. GREBER, E. REESE, A. BALCIUNAS publié dans Farbe Und Lack *70* - n° 4 - 249 (1964).

Ainsi ils peuvent être obtenus par mise en contact du potassium ou du sodium, en milieu éthers-oxydes organiques, avec les monomères styréniques, le rapport métal alcalin/monomères variant environ de 0,5 à 2.

Ils peuvent également être obtenus dans les mêmes conditions opératoires par l'emploi du naphtalène-potassium ou naphtalène-sodium à la place du potassium ou du sodium.

Parmi ces oligomères à sites dicarboanioniques peuvent être cités, à titre illustratif, le tétramère dipotassique ou disodique de l'α-méthylstyrène, les dimères de formules :

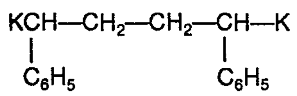

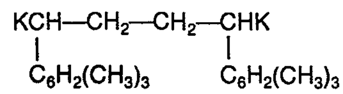

Les amorceurs peuvent être en outre choisis parmi les dilithiens organiques tels que le dilithiostilbène, le dilithio-1,5 naphtalène, le dilithio-1,5 pentane.

La préparation de ces dilithiens est connue, elle est décrite par exemple dans les brevets anglais 906 315 et 972 246.

Les amorceurs peuvent être préparés dans un autre réacteur que celui dans lequel aura lieu la polymérisation anionique et éventuellement bien avant cette polymérisation, ou bien dans ce réacteur au moment même de la polymérisation.

Le rapport molaire monomère styrénique/amorceur conditionne en grande partie la masse moléculaire des polymères à préparer, ce rapport peut se situer dans un large intervalle de valeurs se situant par exemple de 20 à 500, conduisant à des masses moléculaires moyennes en nombre allant de 2 000 à 75 000.

Toutefois, pour que la réaction de polymérisation se développe d'une façon optimale (ayant un taux élevé de transformation des monomères en polymères, par exemple supérieur à 90 %) il est préférable que le rapport monomère/amorceur s'étale de 30 à 400 conduisant à des masses moléculaires moyennes en nombre allant de 3 000 à 60 000.

La durée de polymérisation est fonction principalement de la structure des monomères ; elle peut donc être de quelques minutes avec le styrène et de plusieurs heures avec le vinylmésitylène qui possède un noyau phényle stériquement encombré.

Les polymères vivants obtenus au cours de cette première phase répondent à la formule $F_1$ :

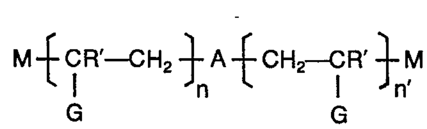

dans laquelle les symboles R', A, G, n, n' et M ont la signification précédemment indiquée relative à la formule F.

Ils ne sont généralement pas très stables à la température ambiante ; il est donc recommandé de les mettre en contact dès la fin de leur préparation, au sein même des solutions dans lesquelles ils ont été préparés, et sous la protection d'une atmosphère gazeuse inerte et anhydre, avec des organochlorosilanes de formule $CH_2=CH—R_2SiCl$ (R ayant la signification précédente indiquée) à raison d'au moins 1 mole des organochlorosilanes pour 1 atome-gramme des métaux alcalins M.

Ce processus de fonctionnalisation, dont l'objet est de remplacer les groupes terminaux

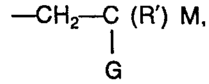

par des groupes terminaux $—CH_2—\underset{G}{\underset{|}{C}}—(R')SiR_2CH = CH_2$, constitue la deuxième phase de la préparation des élastomères thermoplastiques conformes à l'invention.

Les chlorosilanes peuvent être choisis, à titre illustratif, parmi ceux des formules :

$$CH_2{=}CH(CH_3)_2SiCl\ ;\ CH_2{=}CH(CH_3)C_2H_5SiCl\ ;\ CH_2{=}CH(CH_3)C_6H_5SiCl\ ;$$
$$CH_2{=}CH(CH_3)(n—C_3H_7)SiCl\ ;\ CH_2{=}CH(CH_3)CF_3CH_2—CH_2SiCl.$$

De préférence on utilise le vinyldiméthylchlorosilane et le vinylméthylphénylchlorosilane.

Il est recommandé d'introduire les chlorosilanes en excès représentant par exemple 2 à 8 fois la quantité molaire nécessaire pour neutraliser les métaux alcalins M.

Pour éviter les réactions secondaires, en particulier celles provenant de l'attaque des radicaux vinyles des chlorosilanes par les groupes $—CH_2—\underset{G}{\underset{|}{C}}(R')—M$, il est judicieux d'utiliser dans cette deuxième phase une température de réaction aussi basse que possible. Ainsi des températures comprises entre − 50 °C et − 120 °C conviennent remarquablement pour réaliser une substitution pratiquement complète.

Si l'on désire opérer à des températures plus élevées, il est opportun d'abaisser la réactivité du groupe $—CH_2—\underset{G}{\underset{|}{C}}(R')M$, en incorporant à chaque extrémité de la chaîne des copolymères vivants un motif de formule $—CH_2—C(C_6H_5)_2—$

Cette incorporation est aisément obtenue par mise en contact d'au moins 2 moles de diphényléthylène avec une mole des polymères vivants de formule $F_1$ [ce qui correspond à 1 mole de l'amorceur $A(M)_2$], à une température de l'ordre de − 10 °C à − 70 °C dans le milieu réactionnel de formation des polymères de formule $F_1$. Le diphényléthylène ne s'homopolymérise pas ; il en résulte la fixation d'un seul motif $—CH_2—C(C_6H_5)_2$ — en bout de chaîne et l'obtention de polymères vivants de formule $F'_1$ :

$$M—C(C_6H_5)_2—CH_2—\left[\underset{G}{\underset{|}{C}}R'—CH_2\right]_n—A—\left[CH^2—\underset{G}{\underset{|}{C}}R'\right]_{n'}—CH_2—C(C_6H_5)_2—M$$

Ensuite les organochlorosilanes sont introduits dans le milieu réactionnel à des températures de l'ordre de − 30 °C à − 60 °C ; dans ce domaine de température il n'y a pas de réactions secondaires parasites, seule à lieu la réaction de substitution.

Que les polymères possèdent, ou non, à chaque extrémité de leur chaîne un motif $—CH_2—C—(C_6H_5)_2—$, la réaction de substitution de l'atome alcalin M par le groupe $SiR_2CH = CH_2$ est très rapide. Il n'est donc pas opportun d'abandonner aux basses températures précitées le mélange réactionnel, après la fin de l'addition des organochlorosilanes, pendant une période dépassant 1 h. Généralement on introduit rapidement les organochlorosilanes dans la solution refroidie des polymères vivants et laisse revenir, après enlèvement de la source de froid, le mélange réactionnel à la température ambiante.

On peut également introduire la solution refroidie des polymères vivants dans les organochlorosilanes mais ce processus nécessite bien souvent l'emploi d'un appareillage plus complexe.

Les polymères fonctionnalisés sont précipités par dilution du mélange réactionnel avec un composé dans lequel ils sont peu solubles ou pas solubles. Dans ce dessein on utilise préférentiellement les alcanols ayant de 1 à 5 atomes tels que le méthanol, l'éthanol, l'isopropanol, l'isobutanol, le n-pentanol.

Pratiquement le mélange réactionnel est coulé dans un grand volume d'alcanols représentant de 4 à 15 fois son propre volume ; il en résulte la précipitation des polymères qui sont ensuite filtrés, lavés une ou plusieurs fois avec les alcanols et séchés à une température de l'ordre de 50 °C à 180 °C sous une pression inférieure ou égale à la pression atmosphérique.

Les polymères difonctionnels polystyréniques obtenus répondent à la formule $F_2$ :

$$CH_2{=}CHSiR_2—\left[C(C_6H_5)_2—CH_2\right]_a—\left[\underset{G}{\underset{|}{C}}R'—CH_2\right]_n—A—\left[CH_2—\underset{G}{\underset{|}{C}}R'\right]_{n'}\rightarrow$$
$$—\left[CH_2—C(C_6H_5)_2\right]_a— SiR_2CH{=}CH_2$$

dans laquelle les symboles R, R', A, G, a, n et n' ont la signification indiquée précédemment relative à la formule F.

Ces symboles de la formule $F_2$ ont également la signification préférentielle établie pour les symboles de la formule F.

A titre illustratif, peuvent être mentionnés comme polymères difonctionnels ceux répondant aux formules ci-après :

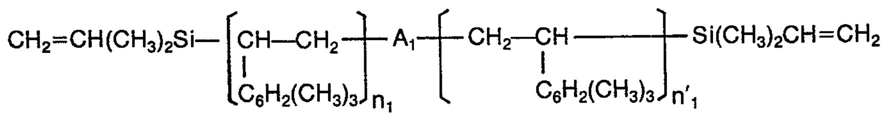

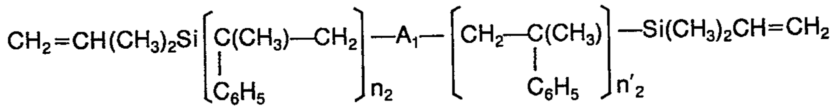

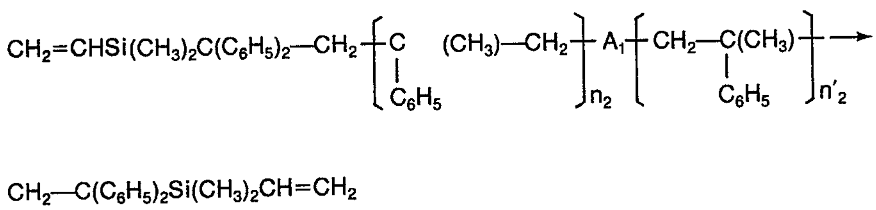

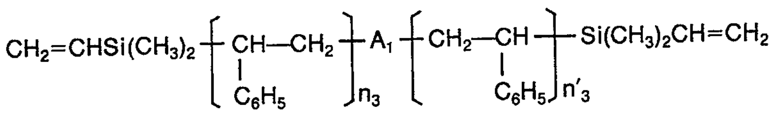

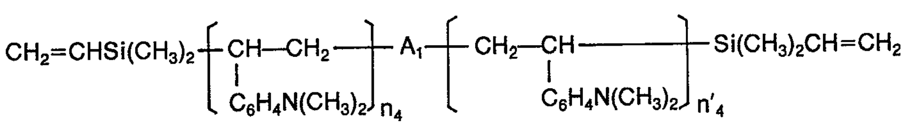

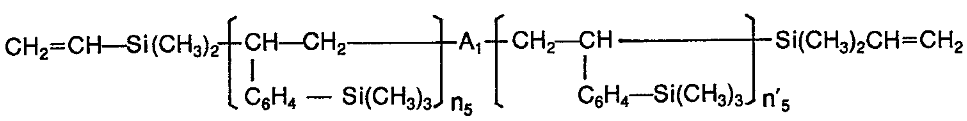

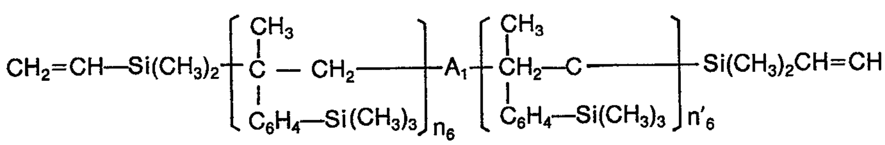

Les symboles $n_1$, $n'_1$, $n_2$, $n'_2$, $n_3$, $n'_3$, $n_4$, $n'_4$, $n_5$, $n'_5$, $n_6$, $n'_6$ et $A_1$ ayant les significations précédemment indiquées.

Ce sont des produits solides, blanchâtres n'ayant pas de propriétés élastomériques.

Dans la troisième phase du procédé de préparation des élastomères thermoplastiques les polymères difonctionnels de formule $F_2$ sont mis à réagir, dans les conditions habituelles des réactions d'hydrosilylation, avec des α-ω dihydrogénopolydiorganosiloxanes liquides de formule générale moyenne $HSiR_2(OSiR_2)_mH$ dans laquelle les symboles R et m ont la signification précédemment indiquée.

Ces α-ω dihydrogénopolydiorganosiloxanes sont disponibles sur le marché des silicones, en outre, leurs techniques de préparation sont maintenant bien au point (demandes françaises 2 225 480, 2 283 934 et 2 300 771).

La masse moléculaire de ces polysiloxanes est variable, elle est déterminée par la nature des substituants R et surtout par la valeur de m qui peut s'échelonner de 1 à 1 500, de préférence de 10 à 1 200, il en résulte que ces polysiloxanes ont une viscosité variable qui s'étale généralement de quelques cPo à 25 °C à 500 000 cPo à 25 °C.

Comme exemples spécifiques de ces polysiloxanes peuvent être mentionnés ceux de formules :

$HSi(CH_3)_2OSi(CH_3)_2H$ ; $HSi(CH_3)_2\left[OSi(CH_3)_2\right]_{m_1}H$

$m_1$ prenant les valeurs 4, 6, 85, 125, 178, 230.

$$HSi(CH_3)_2\left[OSiCH_3(C_2H_5)\right]_5\left[OSi(CH_3)_2\right]_{150}H$$

$$HSi(CH_3)_2\left[OSiCH_3(CH_2CH_2CF_3)\right]_{11}\left[OSi(CH_3)_2\right]_{90}H$$

$$HSi(CH_3)_2\left[OSiCH_3(C_6H_5)\right]_{16}\left[OSi(CH_3)_2\right]_{310}H$$

Les quantités en présence des polymères de formule $F_2$ et des α-ω dihydrogénopolydiorganosiloxanes sont telles que le rapport molaire nombre de groupes vinyles apporté par les polymères/nombre de groupes SiH apporté par les polysiloxanes s'échelonne de 0,7 à 1,3, de préférence de 0,9 à 1,1.

Les copolymères polyséquencés résultant de cette réaction d'hydrosilylation sont terminés à chaque extrémité de leur chaîne par des groupes SiH et/ou $Si{-}CH = CH_2$. On peut cependant avoir d'autres groupes bloqueurs par introduction au cours de la réaction d'hydrosilylation de composés organosiliciques portant un groupe SiH tel que le triméthylmonohydrogénosilane ou de composés organiques ou organosiliciques ayant un radical vinyle tel que le styrène, le triméthylvinylsilane.

Cette réaction d'hydrosilylation, qui conduit à une polyaddition des 2 réactifs, est catalysée par des métaux du groupe VIII de la classification périodique des éléments ou par leurs dérivés minéraux ou organiques. Parmi ces métaux peuvent être cités le platine, le palladium, le ruthénium, le rhodium, l'iridium.

Il est recommandé d'utiliser le platine qui peut être introduit sous la forme de platine élémentaire déposé sur des supports variés (alumine, silice, noir de carbone) ou mieux sous la forme de ses chlorures tels que ceux de formule : $Cl_2Pt$, $Cl_4Pt$, $H_2PtCl_6.6H_2O$. En outre, ces chlorures peuvent être modifiés par mise en contact avec des composés organiques appropriés ; ainsi on peut citer, d'une part, les produits de réaction de l'acide chloroplatinique ou hexachloroplatinique avec des alcools, éthers aldéhydes (brevet américain 3 220 972) et d'autre part les complexes formés entre les chlorures platineux et les oléfines (brevet américain 3 159 601) ou les phosphines ou les sulfures d'alcoyles.

Les quantités utilisées de ces catalyseurs sont faibles, de l'ordre de 0,5 à 30 parties en poids, basées sur le métal, pour 1 million de parties en poids de réactifs (polymères de formule $F_2$ + α-ω dihydrogénopolydiorganosiloxanes mis en œuvre).

La réaction de polyaddition est conduite, de préférence au sein des solutions renfermant des diluants appropriés. On évite ainsi des précipitations intempestives de polymères et des emballements des mélanges réactionnels.

Les diluants utilisés peuvent être choisis parmi :

— les hydrocarbures aliphatiques et cycloaliphatiques, halogénés ou non, tels que le pentane, l'hexane, l'heptane, le chloroforme, le dichloréthane, le tétrachloréthane, le trichloréthylène, le perchloréthylène, le chlorure de méthyle, le cyclohexane, le méthylcyclohexane, le décaline.

— les hydrocarbures aromatiques, halogénés ou non, tels que le toluène, le xylène, le tétraline, le chlorobenzène, l'orthodichlorobenzène.

— les esters aliphatiques d'acides monocarboxyliques tels que l'acétate d'éthyle, le butyle, d'amyle.

La proportion des diluants dans les solutions est variable, dépendant par exemple de la solubilité des produits de départ et des copolymères formés, il est préférable cependant d'utiliser des solutions renfermant de 25 à 75 % en poids de diluants et mieux encore de 35 à 65 %.

La température de réaction doit être suffisante pour provoquer la réaction de polyaddition et maintenir une vitesse de formation acceptable des copolymères. Généralement cette température se situe dans l'intervalle 80 °C à 220 °C. La durée de réaction est fonction de la nature des réactifs et du catalyseur et de la température à laquelle on opère. Elle peut s'échelonner de 30 minutes à une trentaine d'heures.

Après l'achèvement de la réaction de polyaddition, qui peut être déterminée analytiquement par la disparition des groupes SiH et $Si{-}CH = CH_2$, les copolymères de formule F sont précipités par dilution de leur milieu réactionnel avec des composés dans lesquels ils sont peu ou pas solubles.

La technique mise en œuvre est analogue à celle décrite précédemment dans la 2ème phase pour la séparation des polymères de formule $F_2$.

Les copolymères, qui répondent à la formule F précitée, sont ensuite filtrés, lavés et séchés. Ce sont des produits solides ayant des points de ramollissement de l'ordre de 150-250 °C. Les masses moléculaires de ces copolymères dépendent du rapport molaire précité, nombre de groupes $SiCH = CH_2$ apporté par les polymères/nombre de groupes SiH apporté par les dihydrogénopolydiorganosiloxanes,

ainsi que du déroulement de la réaction de polyaddition ; elles peuvent s'échelonner de 20 000 à 2 millions.

Ces copolymères sont des élastomères thermoplastiques dont les propriétés élastomériques sont fonction principalement de la nature et du rapport pondéral des blocs polystyréniques et des blocs diorganopolysiloxaniques constituant chaque motif.

Il est recommandé cependant de fabriquer des copolymères ayant de 30 à 85 % en poids de séquences diorganopolysiloxaniques. Lorsque ce pourcentage est faible, entre 30 et 40 %, les copolymères ont des propriétés mécaniques élevées, de l'ordre de celles des polymères ou copolymères purement organiques. Par contre lorsque ce pourcentage dépasse 45-50 %, les copolymères ont des propriétés mécaniques moins élevées, qui sont néanmoins supérieures à celles des élastomères organopolysiloxaniques usuels.

Ces copolymères se caractérisent par une bonne résistance à la température, supérieure à celle présentée par les polymères purement styréniques. En effet leur module élastique varie faiblement sur une plage de température allant de la température ambiante à des températures dépassant 100 °C.

Ces copolymères peuvent être transformés à l'aide des techniques des caoutchoutiers ou de celles des transformateurs de matières plastiques, en joints, profilés, revêtements isolants ou protecteurs, fibres pleines. De tels objets sont utilisables dans de nombreux domaines de l'industrie tels que l'automobile, l'électrotechnique.

En outre ces copolymères, du fait qu'ils comportent des blocs diorganopolysiloxaniques, ont une bonne perméabilité aux gaz. Ils peuvent donc être utilisés pour la préparation de membranes, à perméabilité sélective aux gaz (par exemple comme poumons artificiels) ou pour séparer au moins l'un des constituants de mélanges gazeux. Etant physiologiquement inertes ils peuvent également être utilisés pour la fabrication de prothèses en contact avec les tissus humains (par exemple comme cathéters, implants divers, valves cardiaques).

On peut incorporer à ces copolymères à raison d'au plus 100 % de leur poids, des charges pulvérulentes choisies parmi les diverses sortes de silice, les argiles calcinées, les noirs de carbone, les oxydes métalliques, les carbonates de métaux alcalins et alcalino-terreux et les silicates de magnésium, d'aluminium ou de zirconium.

Dans tous les exemples qui suivent le tétrahydrofuranne est purifié par distillation en présence du complexe benzophénone sodium et le toluène par distillation sur fils de sodium.

Exemple 1

(x) dans un réacteur d'une capacité de 1 000 $cm^3$, équipé d'un agitateur et d'une gaine thermométrique, et protégé de l'air ambiant par le passage d'un léger courant d'argon anhydre, sont chargés 500 $cm^3$ de tétrahydrofuranne et 40 $cm^3$ d'une solution d'un amorceur à base du tétramère dipotassique de l'α-méthylstyrène [la préparation de cette solution est décrite ci-après dans la partie (y)].

Le contenu de réacteur est refroidi à une température de − 63 °C. On y introduit en une période de 17 minutes 50 g de vinylmésitylène de formule :

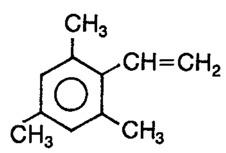

A la fin de l'addition la température atteint − 60 °C. Le mélange réactionnel est alors abandonné pendant 2 h à cette température.

Le mélange est ensuite refroidi à − 70 °C et 8 $cm^3$ de diméthylvinylchlorosilane de formule $CH_2 = CH(CH_3)_2SiCl$ sont introduits en une période de 3 minutes. Cette quantité volumique correspond sensiblement à 4 fois le nombre d'atomes/g de chlore nécessaire pour neutraliser les atomes/g de potassium contenus dans le mélange réactionnel. On constate une décoloration du mélange dès l'introduction des premières gouttes du diméthylvinylchlorosilane.

Après la fin de l'addition du silane on laisse revenir le mélange à la température ambiante et le verse dans 4 l de méthanol agités. Un produit blanchâtre précipite. On l'isole par filtration et le lave avec 2 fois 100 $cm^3$ de méthanol. Il est ensuite placé pendant 2 heures dans une étuve portée à une température de 50 °C dans laquelle règne une pression de 20 millibars. On recueille 50 g d'un polymère solide, blanchâtre. L'analyse effectuée sur le polymère, à l'aide de la chromatographie d'exclusion-diffusion sur gel de silice, conduit aux masses moléculaires moyennes en nombre et en poids ci-après (l'étalonnage est réalisé avec des échantillons calibrés de polystyrène) :

$$\bar{Mn} = 6\,100,\ \bar{Mw} = 6\,500 \text{ soit un rapport } \bar{Mw}/\bar{Mn} \text{ de } 1{,}07$$

Le polymère répond ainsi à la formule générale moyenne :

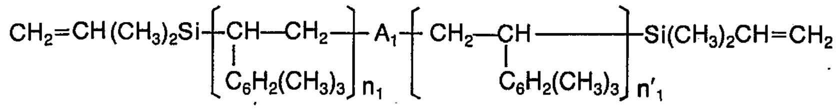

dans laquelle $A_1$ représente le squelette de l'amorceur de formule probable :

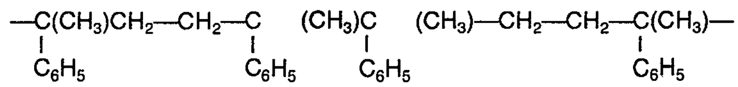

et la somme $n_1 + n'_1$ a pour valeur moyenne 37,4.

(y) dans un réacteur d'une capacité de 250 $cm^3$ équipé d'un agitateur et protégé de l'air ambiant par le passage d'un léger courant d'argon anhydre, sont chargés de 150 $cm^3$ de tétrahydrofuranne et 3,9 g de potassium en morceaux. On ajoute au contenu du réacteur 14 $cm^3$ d'α-méthylstyrène et abandonne l'ensemble à la température de 20 °C.

La solution obtenue est utilisée seulement au bout de 48 h d'abandon à la température de 20 °C ; elle présente, par dosage à l'aide de l'acétanilide, une normalité d'environ 0,36. Par conséquent elle renferme le tétramère dipotassique de l'α-méthylstyrène à la concentration de sensiblement 0,18 mole dans 1 000 $cm^3$ de solution, le tétramère ayant pour formule probable :

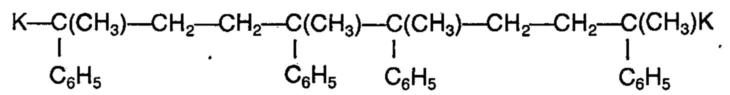

## Exemple 2

Dans le réacteur utilisé dans la partie (x) de l'exemple 1, sont chargés 500 $cm^3$ de tétrahydrofuranne et 45 $cm^3$ de la solution (préparée comme indiqué dans la partie (y) de l'exemple 1) du tétramère dipotassique de l'α-méthylstyrène.

Le contenu du réacteur est refroidi à − 64 °C. On y introduit en une période 15 minutes 50 g d'α-méthylstyrène. A la fin de l'addition la température du mélange atteint − 58 °C ; elle est ramenée à − 65 °C et le mélange est abandonné à cette température pendant 1 heure.

Le mélange est ensuite refroidi à − 95 °C ce qui provoque son épaississement dû à la surfusion du tétrahydrofuranne. On lui ajoute ensuite 8 $cm^3$ du diméthylvinylchlorosilane en une période de 3 minutes. Après la fin de l'addition du silane on laisse revenir le contenu du réacteur à la température ambiante puis le verse dans 4 l de méthanol. Un produit blanchâtre précipite.

On recueille, après filtration, lavage par le méthanol et séchage 50 g d'un polymère solide, blanchâtre.

L'analyse effectuée sur le copolymère à l'aide de la chromatographie d'exclusion-diffusion sur gel de silice conduit aux masses moléculaires moyennes en nombre et en poids ci-après : $\bar{Mn} = 5\,400$, $\bar{Mw} = 5\,830$, soit un rapport $\bar{Mw}/\bar{Mn}$ de 1,08.

Le copolymère répond ainsi à la formule générale moyenne :

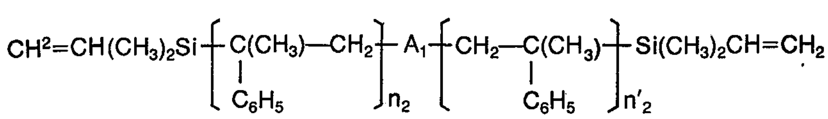

dans laquelle la somme $n_2 + n'_2$ a pour valeur moyenne 40,9 et $A_1$ a la signification déjà indiquée relative à la formule du polymère de l'exemple 1, partie (x).

## Exemple 3

Dans le réacteur, utilisé à la partie (x) de l'exemple 1, sont chargés 400 $cm^3$ de tétrahydrofuranne et

22 $cm^3$ de la solution (préparée comme indiqué dans la partie (y) de l'exemple 1) du tétramère dipotassique de l'α-méthylstyrène.

Le contenu du réacteur est refroidi à – 63 °C ; on y introduit : alors, en une période de 18 minutes, 40 g de styrène. A la fin de l'addition la température du mélange atteint – 53 °C. Il est maintenu à ce niveau pendant 15 minutes. La température est ensuite abaissée à 85 °C et 4 $cm^3$ du diméthylvinylchlorosilane sont introduits dans le réacteur. La décoloration du mélange est instantanée.

Après la fin de l'addition du silane on laisse revenir le contenu du réacteur à la température ambiante et le verse dans 3,5 l de méthanol. On recueille après filtration, lavage avec le méthanol et séchage environ 40 g d'un polymère solide blanchâtre.

L'analyse effectuée sur le polymère à l'aide de la chromatographie d'exclusion-diffusion sur gel de silice conduit aux masses moléculaires moyennes en nombre et en poids ci-après :

$\bar{Mn} = 10\,500$, $\bar{Mw} = 12\,100$, soit un rapport $\bar{Mw}/\bar{Mn}$ de 1,14

Le polymère répond ainsi à la formule moyenne :

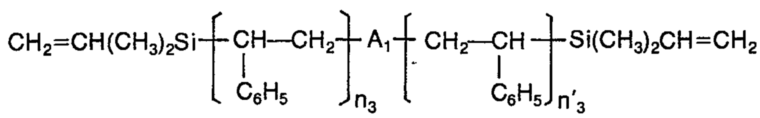

$n_3 + n'_3 = 94,8$, $A_1$ a la signification déjà indiquée à l'exemple 1, partie (x).

Exemple 4

Dans le réacteur, utilisé dans la partie (x) de l'exemple 1, sont chargés 350 $cm^3$ de tétrahydrofuranne et 35 $cm^3$ de la solution (préparée comme indiqué dans la partie (y) de l'exemple 1) du tétramère dipotassique de l'α-méthylstyrène.

Le contenu du réacteur est refroidi à – 68 °C ; on y introduit, en période de 15 minutes, 35 g du paradiméthylaminostyrène de formule :

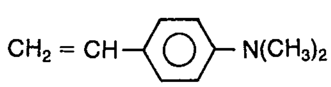

A la fin de l'addition la température du mélange atteint – 63 °C ; elle est maintenue à ce niveau pendant 30 minutes.

La température est ensuite abaissée à – 97 °C et 7 $cm^3$ du diméthylvinylchlorosilane sont introduits dans le réacteur en une période de 3 minutes. On laisse revenir le contenu du réacteur à la température ambiante et le verse dans 3,5 l de méthanol agités, renfermant 10 $cm^3$ d'une solution aqueuse d'ammoniaque (densité = 0,92).

On recueille après filtration, lavage avec le méthanol et séchage environ 33,7 g d'un copolymère solide.

L'analyse effectuée sur le copolymère, à l'aide de la chromatographie d'exclusion-diffusion sur gel de silice, conduit aux masses moléculaires moyennes en nombre et en poids, ci-après :

$\bar{Mn} = 5\,100$, $\bar{Mw} = 6\,100$, soit un rapport $\bar{Mw}/\bar{Mn}$ de 1,2.

Le copolymère répond ainsi à la formule moyenne :

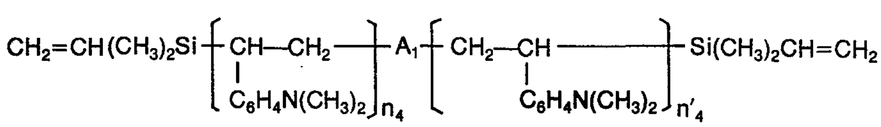

$n_4 + n'_4 = 30,3$ ; $A_1$ a la signification déjà indiquée à l'exemple 1 partie (x).

Exemple 5

Dans un réacteur d'une contenance de 250 cm$^3$, équipé d'un agitateur protégé de l'air ambiant par le passage d'un léger courant d'argon, sont chargés 10 g du polymère difonctionnel $F_2$ obtenu, à partir du vinylmésitylène, selon la partie (x) de l'exemple 1 (Mn = 6 100), 15, 25 d'un α-ω-dihydrogénopolydiméthylsiloxane de masse moléculaire moyenne en nombre 9 300 et 25 g de toluène.

Le mélange laiteux, hétérogène est porté à 95 °C ; ensuite on introduit dans le réacteur 0,045 cm$^3$ d'une solution d'acide hexachloroplatinique ($H_2PtCl_6$—$6H_2O$) renfermant 3,76 mg de platine/cm$^3$.

Le mélange est maintenu pendant 5 h vers 95 °C ; il devient homogène environ 5 minutes après l'addition de la solution d'acide chloroplatinique.

Le contenu du réacteur, refroidi vers 20 °C, est dilué par addition de 200 cm$^3$ de toluène ; il est alors versé lentement dans 3 l de méthanol agités.

Un produit blanchâtre précipite sous forme de longues fibres ; il est filtré, lavé avec du méthanol (2 fois 80 cm$^3$) et séché pendant 2 heures dans une étuve portée à une température de 90 °C dans laquelle règne une pression de 20 millibars.

On recueille ainsi 25 g d'un copolymère dont la viscosité intrinsèque, mesurée à 25 °C dans le tétrahydrofuranne, est de 56,6 cm$^3$/g.

Les analyses effectuées sur le copolymère, à l'aide de la chromatographie d'exclusion-diffusion sur gel de silice, conduisent aux masses moléculaires moyennes en nombre et en poids ci-après :

$$\bar{M}n = 55\,000,\ \bar{M}w = 140\,000, \text{ soit un rapport } \bar{M}w/\bar{M}n \text{ de } 2,5.$$

Les motifs constituant ce copolymère répondent sensiblement à la formule générale :

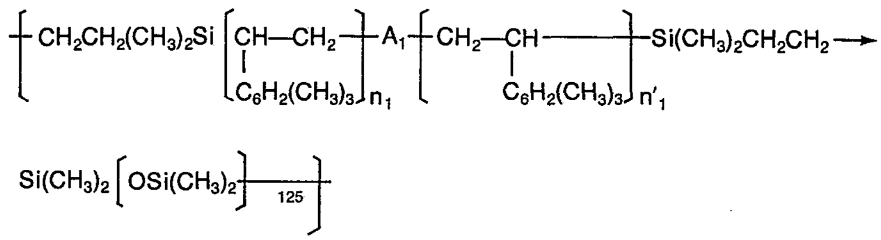

$n_1 + n'_1 = 37,4$ ; $A_1$ a la signification déjà indiquée à l'exemple 1, partie (x).

Plusieurs lots du copolymère sont placés dans des moules où ils subissent un chauffage à 210 °C sous une pression de 50 bars pendant 5 minutes. Il en résulte la formation de plaques caoutchouteuses qui présentent les propriétés mécaniques suivantes :

— résistance à la rupture (selon la norme NF T 46 002) = 105 kg/cm$^2$

— allongement à la rupture (selon la même norme) = 690 %.

Exemple 6

Dans un réacteur d'une contenance de 250 cm$^3$, équipé comme décrit à l'exemple 5, sont chargés 10 g du polymère difonctionnel obtenu, à partir du vinylmésitylène, selon la partie (x) de l'exemple 1 ($\bar{M}n$ = 6 100), 28,03 g d'un α-ω-dihydrogénopolydiméthylsiloxane ($\bar{M}n$ = 17 100) et 38 g de toluène.

Le mélange hétérogène est porté à 95 °C ; on lui ajoute alors 0,045 cm$^3$ de la solution d'acide hexachloroplatinique utilisée à l'exemple 5. Le mélange est ensuite maintenu pendant 5 h à la température de 95 °C. Il devient homogène après 15 minutes de chauffage à cette température. Il est refroidi vers 15 °C puis dilué par addition de 304 cm$^3$ de toluène. L'ensemble est versé lentement dans 4 l de méthanol.

Un produit précipite sous forme de longue fibres ; il est traité selon le processus indiqué à l'exemple précédent c'est-à-dire filtration, lavage par le méthanol et séchage.

On recueille 38 g d'un copolymère dont la viscosité intrinsèque mesurée à 25 °C dans le tétrahydrofuranne, est de 71,2 cm$^3$/g.

Des analyses effectuées à l'aide de la chromatographie d'exclusion-diffusion sur gel de silice conduisent aux masses moléculaires moyennes en nombre et en poids ci-après :

$$\bar{M}n = 76\,000,\ \bar{M}w = 270\,000, \text{ soit un rapport } \bar{M}w/\bar{M}n \text{ de } 3,5$$

Les motifs constituant ce copolymère répondent sensiblement à la formule générale ci-après :

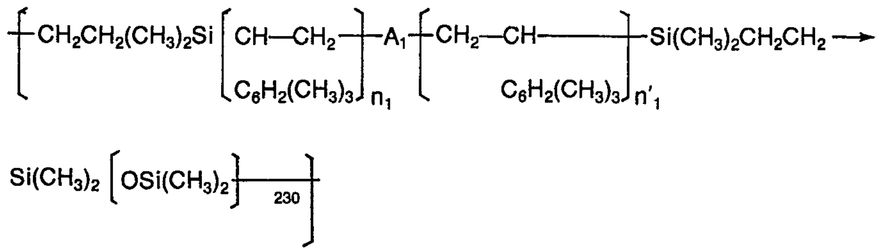

$n_1 + n'_1 = 37,4$ ; $A_1$ a la signification déjà indiquée à l'exemple 1, partie (x).

Des plaques caoutchouteuses, à base du copolymère, sont préparées en suivant le processus du moulage à chaud décrit à l'exemple précédent. Ces plaques présentent les propriétés mécaniques suivantes :

— résistance à la rupture : 64 kg/cm$^2$
— allongement correspondant : 930 %

## Exemple 7

On suit le principe du mode opératoire de l'exemple 6. On introduit dans le réacteur 10 g du polymère difonctionnel $F_2$, obtenu, à partir de l'α-méthylstyrène selon l'exemple 2 (Mn̄ = 5 400) 11,85 g d'un α-ω-dihydrogénopolydiméthylsiloxane (Mn̄ = 6 400) et 22 g de toluène.

Au contenu du réacteur porté à 95 °C est ajouté 0,05 cm$^3$ de la solution d'acide hexachloroplatinique utilisée à l'exemple 5. Le mélange est maintenu pendant 5 heures à 95 °C puis dilué par addition de 176 cm$^3$ de toluène.

L'ensemble, refroidi vers 20 °C, est coulé dans 2,5 l de méthanol. Un produit précipite. Après filtration, lavage par le méthanol et séchage, on recueille 22 g d'un copolymère solide dont la viscosité intrinsèque, mesurée à 25 °C dans le tétrahydrofuranne, est de 44,2 cm$^3$/g.

Des analyses effectuées sur ce copolymère, à l'aide de la chromatographie d'exclusion-diffusion sur gel de silice, conduisent aux masses moléculaires moyennes en nombre et en poids ci-après :

Mn̄ = 37 000, Mw̄ = 97 000, soit un rapport Mw̄/Mn̄ de 2,6

Les motifs constituant ce copolymère répondent sensiblement à la formule générale :

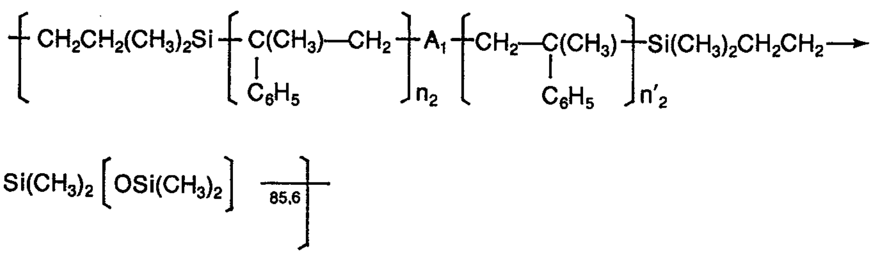

$n_2 + n'_2 = 40,9$ ; $A_1$ a la signification déjà indiquée à l'exemple 1 partie (x).

Des plaques caoutchouteuses, à base du copolymère, sont préparées par le processus de moulage à chaud décrit à l'exemple 5. Elles présentent une résistance à la rupture de 124 kg/cm$^2$ et un allongement correspondant de 380 %.

## Exemple 8

On suit le principe du mode opératoire de l'exemple 6 et introduit dans le réacteur 10 g du polymère difonctionnel $F_2$ obtenu, à partir du styrène, selon l'exemple 3, (Mn̄ = 10 500) 12,62 g d'un α-ω-dihydrogénopolydiméthylsiloxane de masse moléculaire moyenne en nombre 13 250 et 23 g de toluène.

Au contenu du réacteur porté à 95 °C, est ajouté 0,025 cm$^3$ de la solution d'acide hexachloroplatinique utilisée à l'exemple 5. Le mélange laiteux, hétérogène est maintenu 16 h à 95 °C puis dilué par addition de 180 cm$^3$ de toluène. L'ensemble, refroidi vers 20 °C, est coulé dans 2,5 l de méthanol. Un

produit blanchâtre précipite.

Après filtration, lavage et séchage on recueille 22 g d'un produit solide.

Des analyses effectuées sur ce copolymère, à l'aide de la chromatographie d'exclusion-diffusion sur gel de silice, conduisent aux masses moléculaires moyennes en nombre et en poids ci-après :

$$\bar{M}n = 50\,000,\ \bar{M}w = 3\,000\,000, \text{ soit un rapport } \bar{M}w/\bar{M}n \text{ de } 6.$$

Les motifs constituant ce copolymère répondent sensiblement à la formule générale :

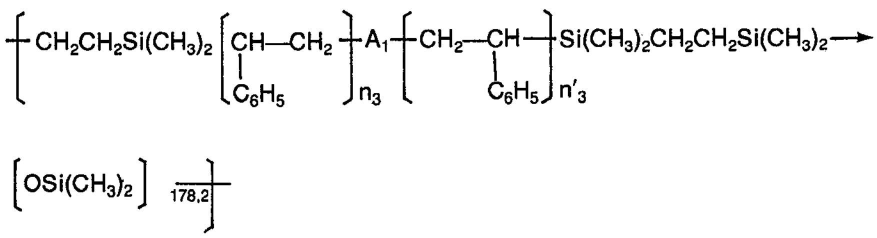

$n_3 + n'_3 = 94{,}8$ ; $A_1$ a la signification déjà indiquée à l'exemple 1 partie (x).

Des plaques caoutchouteuses, à base du copolymère, sont préparées par le processus de moulage à chaud décrit à l'exemple 5. Elles présentent une résistance à la rupture de 76 kg/cm$^2$ et un allongement correspondant de 350 %.

## Exemple 9

On suit le principe du mode opératoire de l'exemple 6 et introduit dans le réacteur 20 g du polymère difonctionnel $F_2$ obtenu, à partir du p-diméthylaminostyrène, selon l'exemple 4, ($\bar{M}n$ = 5 100) 37,20 g d'un α-ω-dihydrogénopolydiméthylsiloxane de masse moléculaire moyenne en nombre 9 300 et 56 g de toluène.

Au contenu du réacteur porté à 95 °C, est ajouté 0,104 cm$^3$ de la solution d'acide hexachloroplatinique utilisé à l'exemple 5. Le mélange laiteux est maintenu pendant 20 h à 95 °C ; on rajoute alors 0,100 cm$^3$ de la solution d'acide hexachloroplatinique précédente et maintient encore pendant 8 h à 95 °C.

L'ensemble est dilué par addition de 455 cm$^3$ de toluène puis coulé dans 4 l de méthanol renfermant 12 cm$^2$ d'une solution aqueuse d'ammoniaque, de densité 0,92. Un produit blanchâtre précipite. Après filtration, lavage et séchage, on recueille 55,15 g d'un copolymère de point de ramollissement 200 °C.

Des analyses effectuées sur le copolymère, à l'aide de la chromatographie d'exclusion-diffusion sur gel de silice, conduisent aux masses moléculaires moyennes en nombre et en poids ci-après :

$$\bar{M}n = 80\,000,\ \bar{M}w = 330\,000, \text{ soit un rapport } \bar{M}w/\bar{M}n \text{ de } 4{,}1.$$

Les motifs constituant ce copolymère répondent sensiblement à la formule générale :

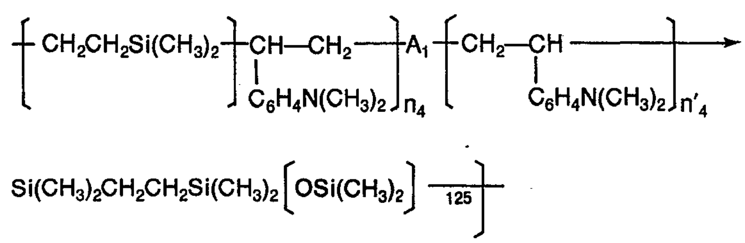

$n_4 + n'_4 = 30{,}3$ ; $A_1$ a la signification déjà indiquée à l'exemple 1, partie (x).

Des plaques caoutchouteuses, à base du copolymère, sont préparées selon le processus du moulage à chaud décrit à l'exemple 5. Elles présentent une résistance à la rupture de 50 kg/cm$^2$ et un allongement correspondant de 160 %.

## Exemple 10

Selon le mode opératoire décrit à l'exemple 1, on ajoute 14,3 g de p(triméthylsilyl) styrène (obtenu

par synthèse magnésienne à partir de chlorotriméthylsilane et de p bromostyrène) à une solution contenant 150 ml de tétrahydrofuranne et 7 $cm^3$ d'une solution de tétramère dipotassique de l'α-méthylstyrène et de normalité 0,206. Une fois la polymérisation terminée on abaisse la température du milieu réactionnel à − 85 °C et on ajoute 1 $cm^3$ de chlorodiméthylvinylsilane.

Par précipitation dans du méthanol, après lavage, filtration et séchage on recueille 14,2 g de polytriméthyl (vinyl-4') phénylsilane.

Ce produit a une masse moléculaire moyenne en nombre, déterminé par chromatographie sur gel perméable Mñ, GPC = 10 500 g/mole et une masse moléculaire moyenne en poids, déterminée par diffusion de la lumière Mw̄, DDL = 10 900 g/mole.

Sa température de transition vitreuse, déterminée par calorimétrie différentielle est de 131 °C.

Le polymère répond ainsi à la formule générale moyenne :

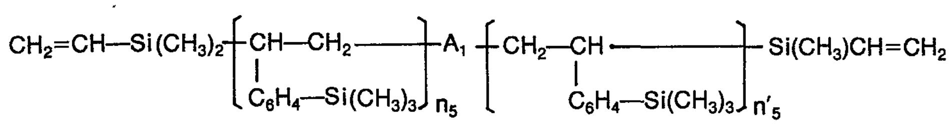

avec $n_5 + n'_5 = 58$ ; $A_1$ représentent le reste du tétramère de l'α-méthylstyrène.

Le copolymère polystyrène-polysiloxanique est alors préparé dans les mêmes conditions que celles décrites à l'exemple 5.

On ajoute à 16 $cm^3$ de toluène : 5 g du « polystyrène » précédent et 8,55 g de polydiméthylsiloxane α, ω dihydrogéné de masse moyenne en nombre 17 100 g/mole on élève la température du milieu réactionnel à 95 °C et on introduit 0,025 ml de solution à 10 g/l d'$H_2P\ Cl_6$, $6H_2O$ dans l'isopropanol.

Le milieu est homogène après 10 minutes environ. Durée totale de réaction : 18 heures.

Le copolymère multiséquencé est récupéré par précipitation dans du méthanol. Après lavage, filtration et séchage, on recueille 100 % de copolymère de masse moléculaire moyenne en poids, déterminée par diffusion de la lumière.

Mw̄, DDL = 107 000 g/mole

Les motifs constituant ce copolymère répondent à la formule :

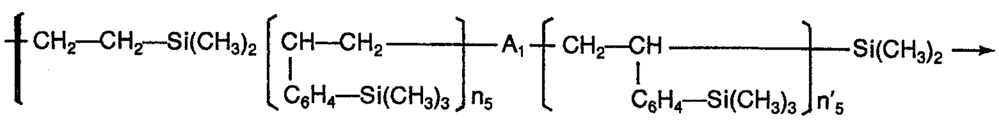

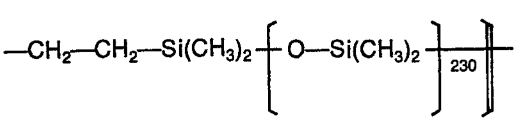

avec $n_5 + n'_5 = 58$.

Exemple 11

Selon le mode opératoire décrit à l'exemple 1, on introduit 25 g de p(triméthylsilyl), α-méthylstyrène (obtenu par synthèse magnésienne à partir de chlorotriméthylsilane et de p-bromo, α-méthylstyrène) dans une solution contenant 250 ml de tétrahydrofuranne et 13,2 $cm^3$ d'une solution de tétramère dipotassique de l'α-méthylstyrène et de normalité 0,210 N.

Quand la polymérisation est terminée, on ajoute à la solution préalablement refroidie à − 95 °C, 1,5 $cm^3$ de chlorodiméthylvinylsilane.

Le polymère est précipité dans du méthanol, lavé et séché. On obtient ainsi 25 g de poly-triméthyl (isopropényl-4') phénylsilane Mñ, GPC : 9 200 g/mole.

Température de transition vitreuse : 159 °C.

Le polymère répond ainsi à la formule générale moyenne

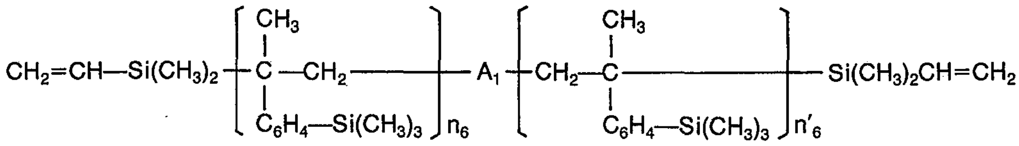

avec $n_6 + n'_6 = 45$

$A_1$ représente toujours le reste du tétramère de l'α-méthylstyrène.

Le copolymère polystyrénique-polysiloxane est alors préparé selon les conditions des précédents essais :

A 33 $cm^3$ de toluène, on ajoute 10 g du « polystyrène » précédent et 19 g du même polydiméthylsiloxane que celui utilisé dans la synthèse de l'exemple 10. On rajoute au milieu, porté à 95 °C 0,030 ml de la solution de catalyseur. La solution est homogène après 15 minutes environ. Durée totale de réaction : 4 heures.

On récupère 100 % de copolymère multiséquencé, $\bar{Mw}$, DDL : 180 000 g/mole

Le copolymère est alors constitué par les motifs de formule :

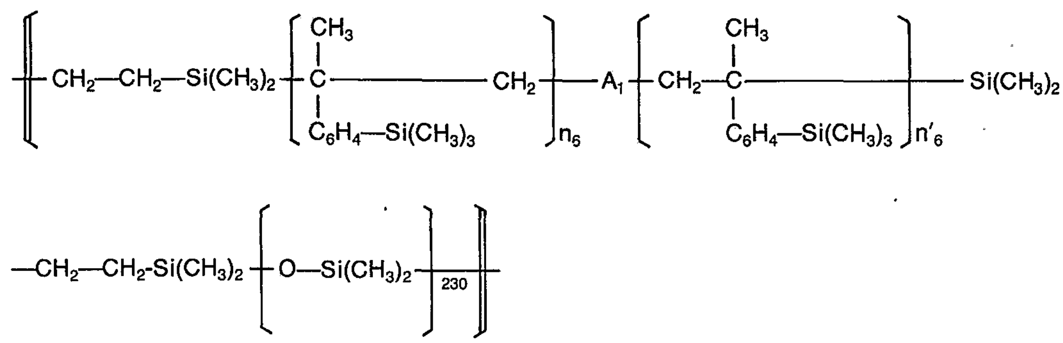

avec $n_6 + n'_6 = 45$

On prépare à partir de ce copolymère des plaques caoutchouteuses pour moulage à chaud selon le mode opératoire décrit à l'exemple 5. Ces plaques ont une résistance à la rupture à la traction de 123 $kg/cm^2$. L'allongement à la rupture est de 786 %.

**Revendications**

1. Elastomères thermoplastiques caractérisés en ce qu'ils sont formés d'une succession de motifs répondant à la formule générale moyenne F :

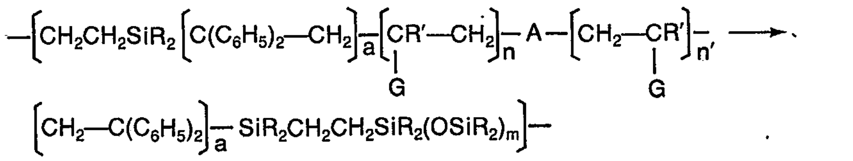

dans laquelle :

— les symboles R, identiques ou différents, représentent des radicaux méthyles, éthyles, n-propyles, phényles, trifluoro-3,3,3 propyles.

— les symboles R', identiques, représentent des atomes d'hydrogène, des radicaux méthyles.

— le symbole A représente un radical hydrocarboné divalent, sans insaturation aliphatique, ayant de 6 à 45 atomes de carbone.

— les symboles G identiques ou différents représentent l'un des radicaux de formule :

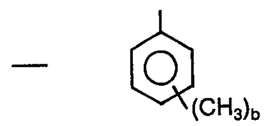

avec b représentant 0, 1, 2 ou 3

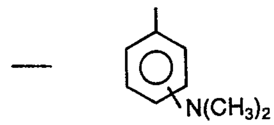

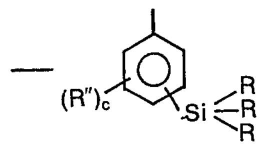

avec :

— R" représentant un atome d'hydrogène, un radical méthyle, ou un groupement —$SiR_3$.

— c représentant un nombre entier égal à 0, 1 ou 2.

— R ayant la signification préalablement donnée.

— les symboles a identiques, représentent zéro ou 1.

— les symboles n ou n', identiques ou différents, représentent des nombres quelconques dont la somme s'étale de 20 à 500.

— le symbole m présente un nombre quelconque s'étalant de 1 à 1 500.

2. Elastomères thermoplastiques selon la revendication 1, caractérisés en ce que dans la formule F :

— les symboles R représentent des radicaux méthyles.

— le symbole A représente le radical naphylène-1,5, le tétramère de l'α-méthylstyrène, les radicaux de formules

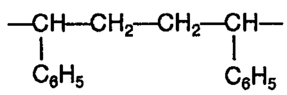 ou 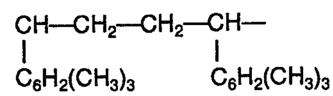

— Les symboles G représentent :

— des radicaux phényles, des radicaux triméthylsilylphényle ; bis(triméthylsilyl) phényle ; tris(triméthylsilyl) phényle et uniquement lorsque les symboles R' représentent des atomes d'hydrogène, des radicaux de formule.

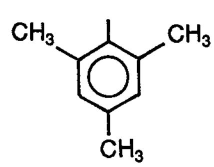 ou 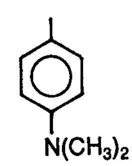

— les symboles a représentent zéro.

— les symboles n et n' représentent des nombres quelconques dont la somme s'étale de 30 à 400.

— le symbole m représente un nombre quelconque s'étalant de 10 à 1 200.

3. Procédé de préparation des élastomères thermoplastiques selon la revendication 1, de formule F, caractérisé en ce qu'il comporte :

dans une première phase

(i) la polymérisation anionique de monomères de formule,

C(R') = $CH_2$, à l'aide d'amorceurs de formule $A(M)_2$,

|

G

dans laquelle les symboles M, identiques, représentent des atomes de potassium, de sodium, ou de lithium, en milieu éthers-oxydes organiques, à une température comprise entre − 85 °C et − 30 °C, le rapport molaire monomères/amorceurs s'étalant de 20 à 500, ce qui conduit à des polymères vivants de formule $F_1$

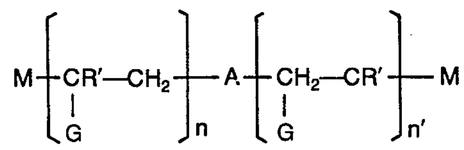

(ii) éventuellement la mise en contact du mélange réactionnel (i) avec du diphényléthylène de formule $C(C_6H_5)_2 = CH_2$, à une température comprise entre − 70 °C et − 10 °C, à raison d'au moins 2 moles de diphényléthylène pour 1 mole des polymères de formule $F_1$,

ce qui conduit à des polymères vivants de formule $F'_1$

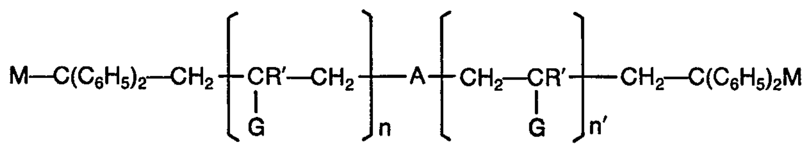

dans une deuxième phase

la neutralisation des polymères vivants de formule $F_1$ ou $F'_1$ par mise en contact du milieu réactionnel (i) maintenu à une température comprise entre − 120 °C et − 50 °C, ou du milieu réactionnel (ii) maintenu à une température comprise entre − 60 °C et − 30 °C, avec des vinylorganochlorosilanes de formule $CH_2 = CH—R_2SiCl$, ce qui conduit aux polymères de formule $F_2$

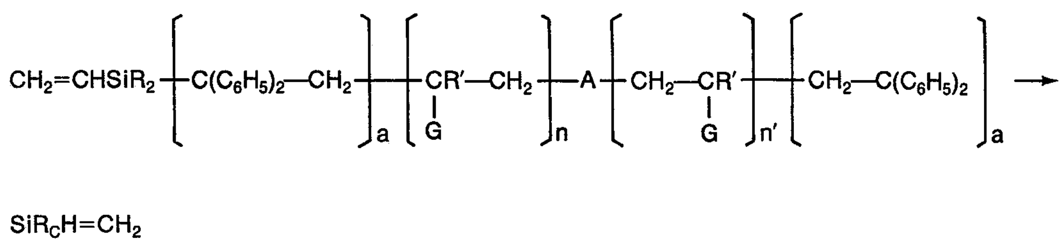

dans une troisième phase.

La polyaddition entre les polymères de formule $F_2$ et les dihydrogénodiorganopolysiloxanes de formule $HSiR_2(OSiR_2)_mH$, dans un rapport nombre de groupes vinyles des polymères $F_2$/nombre de groupes SiH des polysiloxanes compris entre 0,7 à 1,3, à une température comprise entre 80 °C et 220 °C, en présence de catalyseurs métalliques, ou de leurs dérivés minéraux ou organiques, choisis dans le groupe constitué du platine, du palladium, du ruthénium, du rhodium, de l'iridium.

Les symboles R, R', G, A, a, n, n', m, ont la signification indiquée dans la revendication 1.

## Claims

1. Thermoplastic elastomers, characterised in that they are formed by a succession of units corresponding to the average general formula F

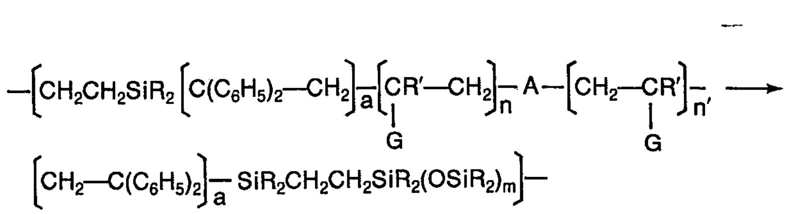

in which :

— the symbols R, which are identical or different, represent methyl, ethyl, n-propyl, phenyl or 3,3,3-trifluoropropyl radicals,

— the symbols R', which are identical, represent hydrogen atoms or methyl radicals,

— the symbol A represents a divalent hydrocarbon radical, without aliphatic unsaturation, having from 6 to 45 carbon atoms,

— the symbols G, which are identical or different represent radicals of the formula :

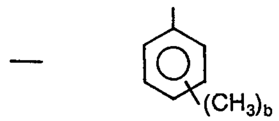

(b being 0, 1, 2 or 3)

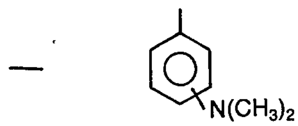

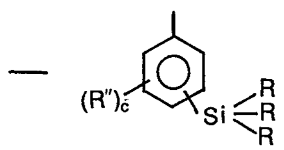

in which :

— R" represent hydrogen methyl radical or $—SiR_3$ ;

— c being 0, 1 or 2 and

— R having the meaning already given,

— the symbols a, which are identical, represent zero or 1, the symbols n and n', which are identical or different, represent any number of which the sum is between 20 and 500,

— and the symbol m represents any number between 1 and 1 500.

2. Thermoplastic elastomers according to claim 1, characterised in that, in the formula F :

— the symbols R represent methyl radicals,

— the symbol A represents the naphth-1,5-ylene radical, the α-methylstyrene tetramer or the radicals of the formulae :

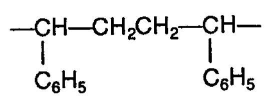 or 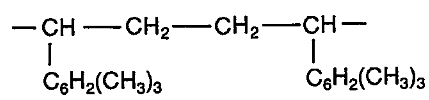

— the symbols G represent :

— phenyl radical

— trimethylsilylphenyl radical

— bis (trimethylsilyl) phenylradical

— tris (trimethylsilyl) phenylradical

— and solely in the case where the symbols R' represent hydrogen atoms, radicals of formula

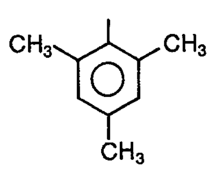 or 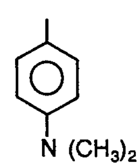

the symbols a represent zero, the symbols n and n' represent any numbers of which the sun is between 30 and 400, and the symbol m represents any number between 10 and 1 200.

3. Process for the preparation of the thermoplastic elastomers according to claim 1, of the formula F, characterised in that it comprises :

in a first stage,

(i) the anionic polymerisation of monomers of the formula

$$\underset{G}{\underset{|}{C(R')}} = CH_2$$

using initiators of the formula $A(M)_2$, in which the symbols M, which are identical, represent potassium, sodium or lithium atoms, in an organic ether medium, at a temperature between − 85 °C and − 30 °C, the molar ratio of monomers/initiators being between 20 and 500, which leads to living polymers of the formula $F_1$

$$M\left[\underset{G}{\underset{|}{C}}R'-CH_2\right]_n A\left[CH_2-\underset{G}{\underset{|}{C}}R'\right]_{n'} M$$ , and

(ii) optionally bringing the reaction mixture (i) into contact with ediphenylthylene of the formula $C(C_6H_5)_2 = CH_2$, at a temperature between − 70 °C and − 10 °C, at the rate of at least 2 mols of diphenylethylene per mol of the polymers of the formula $F_1$, which leads to living polymers of the formula $F'_1$

$$M-C(C_6H_5)_2-CH_2-\left[\underset{G}{\underset{|}{C}}R'-CH_2\right]_n-A-\left[CH^2-\underset{G}{\underset{|}{C}}R'\right]_{n'}-CH_2-C(C_6H_5)_2M$$

in a second stage,
the neutralisation of the living polymers of the formula $F_1$ or $F'_1$ by bringing the reaction mixture (i), kept at a temperature between − 102 °C and − 50 °C, or the reaction medium (ii), kept at a temperature between − 60 °C and − 30 °C, into contact with vinylorganochlorosilanes of the formula $CH_2 = CH-R_2SiCl$, which leads to the polymers of the formula $F_2$

$$CH_2{=}CHSiR_2-\left[C(C_6H_5)_2-CH_2\right]_a-\left[\underset{G}{\underset{|}{C}}R'-CH_2\right]_n-A-\left[CH_2-\underset{G}{\underset{|}{C}}R'\right]_{n'}\rightarrow$$

$$-\left[CH_2-C(C_6H_5)_2\right]_a-SiR_2CH{=}CH_2$$

and in a third stage,
the polyaddition of the polymers of the formula $F_2$ to the dihydrogenodiorganopolysiloxanes of the formula $HSiR_2(OSiR_2)_mH$, in a ratio of number of vinyl groups in the polymers $F_2$/number of groups SiH in the polysiloxanes of between 0,7 and 1,3, at a temperature between 80 °C and 220 °C, in the presence of metal catalysts, or of their inorganic or organic derivatives, chosen from the group comprising platinum, palladium, ruthenium, rhodium and iridium.

## Ansprüche

1. Thermoplastische elastomere gekennzeichnet durch ein vielzahl von wiederkehrenden einheiten entsprechend der allgemeinen durchschnittsformel F :

$$-\left[CH_2CH_2SiR_2\left[C(C_6H_5)_2-CH_2\right]_a\left[\underset{G}{\underset{|}{C}}R'-CH_2\right]_n-A-\left[CH_2-\underset{G}{\underset{|}{C}}R'\right]_{n'}\longrightarrow\right.$$

$$\left.\left[CH_2-C(C_6H_5)_2\right]_a SiR_2CH_2CH_2SiR_2(OSiR_2)_m\right]-$$

in welcher :

— die Symbole R, gleich oder verschieden sind, Radikale der Methyle, Äthyle, N-propyle, phenyle und 3,3,3-trifluor Propyle darstellen,

— die Symbole R', die gleich sind wasserstoffatome und Methylradikale darstellen,

— das Symbol A ain bivalentes Kohlenwasserstoff radikal mit 6 bis 45 Kohlenstoffatomen ohne aliphatischer Unsättigung darstellt,

— die Symbole G, gleich oder verschieden, eines der Radikale mit folgender formel darstellen :

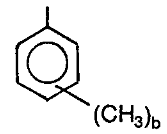

(mit b, das 0, 1, 2 oder 3 bedeutet)

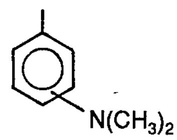

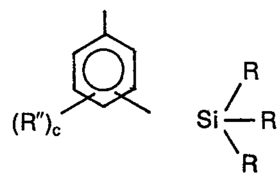

worin :

— R" ein Wasserstoffatom, ein Methylradikal oder eine $SiR_3$—Gruppierung darstellt,

— c eine ganze zahl gleich 0, 1 oder 2 darstellt,

— R die oben angegebene Bedeutung besitzt,

— die Symbole a, die gleich sind, 0 oder 1 darstellen,

— die Symbole n oder n', die gleich oder verschieden sind, irgendwelche Zahlen deren Summe sich im Bereich von 20 bis 500 bewegt, darstellen,

— das Symbol m stellt irgendeine Zahl, sich im Bereich, von, 1 bis 1 500 bewegen, dar.

2. Thermoplastische Elastomere nachdem Patentanspruch 1, dadurch gekennzeichnet, das in der formel F

— die Symbole R Methylradikale darstellen,

— das Symbole A das naphtylen-1,5 Radikal, das tetramer von,

— Methylstyrol und die Radikale der Formeln darstellt.

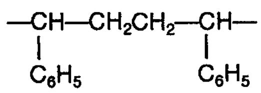

oder

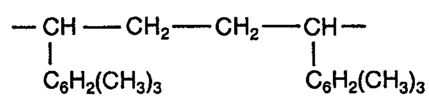

— die Symbole G stellen dar :

— phenylradikale, trimethyl silylphenylradikale, bis(trimethylsilyl) Phenyle ; tris(trimethylsilyl) Phenyle und nur wenn die Symbole R' Wasserstoffatome darstellen, die Radikale mit der Formel

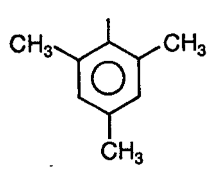

oder

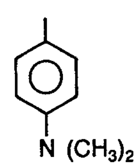

— die symbole a stellen Null dar,

— die symbole n und n' stellen irgendwelche Zahlen, deren Summe sich im Bereich von 30 bis 400 bewegt, dar,

— das symbol m stellt irgendeine Zahl, sich im Bereich von 10 bis 1 200 bewegend, dar.

3. Verfahren zur herstellung der thermoplastischen Elastomere der formule F nach den Patentanspruch 1, dadurch gekennzeichnet, das es folgendes beinhattet in einer ersten Stufe :

(i) die anionische Polymerisation der Monomere der formel

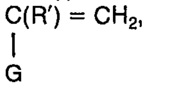

mit hilfe eines initiators der formel $A(M)_2$, in welcher symbole M die gleich sind Kalium-atome, Natrium atome oder Lithium atome in organischen Ätheroxyder darstellen, in einen temperatur bereich von – 85 °C bis – 30 °C, bewegtsich das Molverhältnis Monomere zu Initiator in einen Bereich von 20 bis 500, was zu den aktiven Polymeren der Formel $F_1$ führt

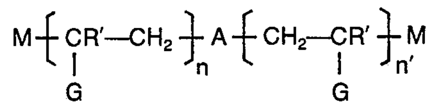

(ii) möglicherweise indem man des Reaktionsgemisch der Stufe (i) mit Diphenyläthylen der Formel $C(C_6H_5)_2 = CH_2$ in einem temperatur bereich von – 70 °C bis – 10 °C in Kontakt bringt, mindestens in Höhe von 2 molen Diphenyläthyles für 1 Mol des Polymers der Formel $F_1$, was zu den aktiven Polymeren des Formel $F'_1$ führt

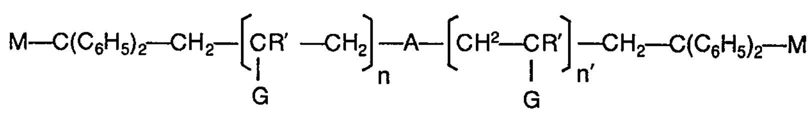

in einer zweiten stufe die Neutralisation des aktiven Polymere der Formel $F_1$ oder $F'_1$ durch in Kontakt bringen des Reaktionsmittels (i), aufrechterhalten in einen Temperatur bereich von – 120 °C bis – 50 °C, oder des Reaktionsmittels (ii), aufrechterhalten in einem Temperatur bereicht von – 60 °C bis – 30 °C, mit vinylorganochlorosilanen der Formel $CH_2 = CH—R_2SiCl$, was zu den polymeren der formel $F_2$ fuhrt

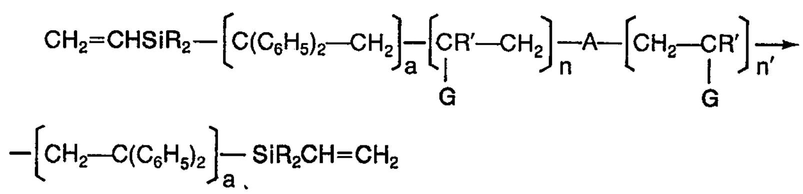

in einer dritten stufe die Polyaddition zwischen den Polymeren der Formel $F_2$ und den Dihydrogenodiorganopolysiloxanen der Formel $HSiR_2(OSiR_2)_mH$, das verhältnis der Anzahl der Vinylgruppen der Polymere $F_2$ zu der Anzahlder SiH-gruppen der Polysiloxane sich in einen Bereich von 0,7 bis 1,3 bewegend, in einen Temperatur bereich von 80 °C bis 220 °C, in Anwesenheit von Metallkatalysatoren oder ihner mineralischen oder organosichen Derivate ausgewählt aus der Gruppe, die sich aus Platin, Palladium, Ruthenium, Rhodium und Iridium zusammensetzt.

Die Symbole R, R', G, A, a, n, n', m haben im Patentanspruch 1, die ihnen zugewiesene Bedeutung.